# EUROPEAN PATENT APPLICATION

(11) **EP 0 546 980 A1**
(43) Date of publication of application: **16.06.1993**
(21) Application number: 92500164.6
(22) Date of filing: 10.12.1992
(51) Int. Cl.: B60D 1/52

(54) **Hook-up device for trailers and the like**

(30) Priority: 13.12.1991 ES 9103763
(71) Applicant: Sanchis Font, Gonzalo, E-08018 Barcelona (ES)
(72) Inventor: Sanchis Font, Gonzalo, E-08018 Barcelona (ES)
(74) Representative: Ponti Sales, Adelaida

(57) **Abstract**

It comprises a bar (1) provided at one end with an elbow (2) crowned by a ball or ball joint (3) which can be coupled to the hook-up device of the trailer, caravan or the like, said bar (1) being fitted in removable position on the body of the driving vehicle, and is characterized in that the end of the bar (1) opposite the elbow (2) presents a shank (4) of triangular cross section, intended to be coupled in a wedge-like manner into a housing (7) of a piece (6) forming a single unit with the body of the driving vehicle, the inner shape of which housing (7) is also triangular and complementary to the outer shape of the shank (4) described, the housing (7) and the bar shank (4) being provided with an interlocking securing device which can easily be detached whenever wished, in order to ensure immobilization of the bar (1) once the shank (4) has been coupled into the housing (7).

## Description

The present invention refers to a hook-up device for trailers and the like, which is much easier to operate than the hook-up devices known to date.

### BACKGROUND OF THE INVENTION

Hook-up devices for trailers, caravans and the like on vehicles consist of a metal bar which ends in an elbow crowned by a sphere or ball joint. The bar described is attached to the body of the vehicle by means of nuts and bolts, which are complicated to handle for attaching or detaching the bar.

### DESCRIPTION OF THE INVENTION

The hook-up device object of the invention has been designed to simplify this operation and facilitate attachment and detachment of the device.

The hook-up device in question comprises a bar provided at one end with an elbow crowned by a ball or ball joint which can be coupled to the hook-up device of the trailer, caravan or the like, said bar being fitted in removable position on the body of the driving vehicle. On the basis of this embodiment, the device is characterized in that the end of the bar opposite the elbow presents a shank of triangular cross section, intended to be coupled in a wedge-like manner into a housing of a piece forming a single unit with the body of the driving vehicle, the inner shape of which housing is also triangular and complementary to the outer shape of the shank described. The housing and the bar shank are provided with an interlocking securing device which can easily be detached whenever wished, in order to ensure immobilization of the bar once the shank has been coupled into the housing.

In a possible embodiment, the securing device comprises a wedge transversally slidable with respect to the position of the shank, which tends to remain fitted in a recess formed by complementary lowered sections provided at the bottom of the shank housing and in the shank itself. The wedge has an extension which projects from the housing when in working position.

### BRIEF DESCRIPTION OF THE DRAWINGS

For a better understanding of all that is set forth in the present specification, there are attached some drawings in which, only by way of example, a practical case of embodiment of the hook-up device for trailers is shown.

In said drawings,
figure 1 is a side elevation view of the device spaced apart from the vehicle body;
figure 2 is a view similar to that of figure 1, showing the device fitted onto the body;
figure 3 is a cross-sectional view of the device with its parts separated; and
figure 4 is a view similar to that of figure 3, but with the device assembled.

### DESCRIPTION OF A PREFERRED EMBODIMENT

The device in question comprises a bar -1- provided at one end with an elbow -2- crowned by a sphere or ball joint -3- on which is coupled the complementary hook-up device placed on the trailer, caravan or the like, not shown in the drawing.

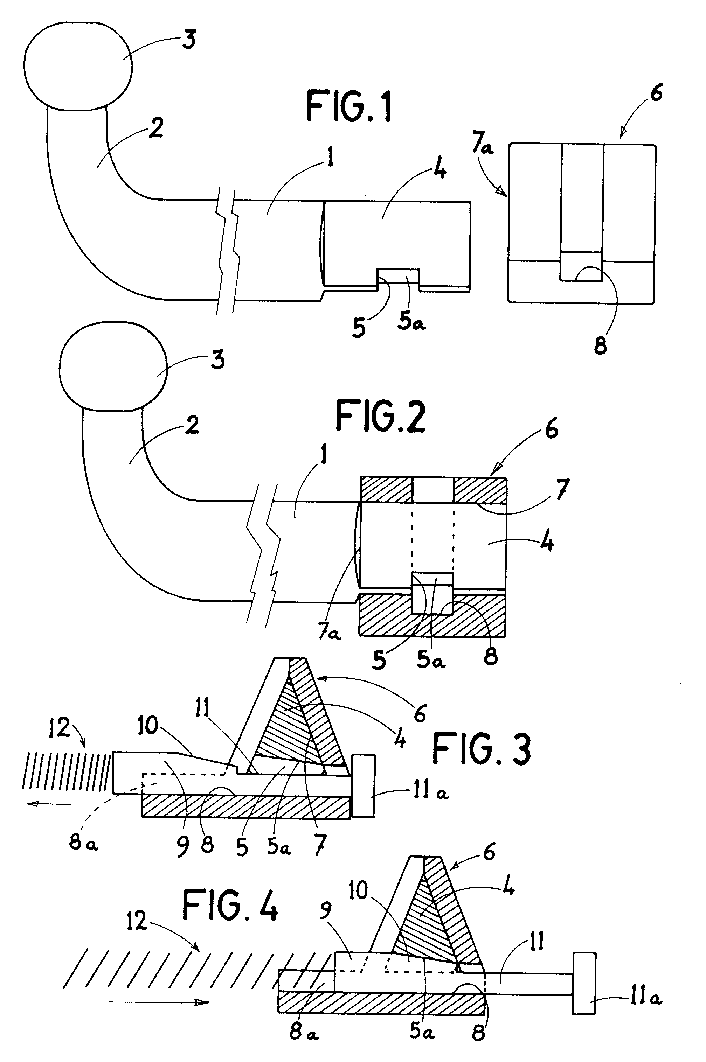

The bar -1- is provided at the end opposite the elbow -2- with a shank -4- of triangular or wedge-shaped cross section, having the particular feature of the lower side or base presenting a transversal groove -5- with its bottom -5a- inclined in a transversal direction (figure 3).

The device further includes a piece -6- provided on the body of the vehicle, which forms a triangular housing -7-, whose inner outline is complementary to the outer outline of the shank -4-, provided with at least one inlet -7a- for the insertion of the said shank.

The bottom of the housing -7- presents a transversal depression -8-, with an inlet -8a-, opposite which is situated a moveable piece -9- which comprises a wedge -10- and a longitudinal extension -11- with a head -11a-. The piece -9- is pushed by a spring -12-, which tends to keep it inserted into the depression -8-.

As may be deduced from all that has been set forth and from observation of the drawing, in order to attach the bar -1- in working position it is first necessary to withdraw the part -9- from the depression -8- (figure 3), compressing the spring -12- until the head -11a- abuts against the piece -6-. The triangular shank -4- is then inserted into the housing -7- up to a stop position in which the groove -5- coincides in position with the depression -8- (figure 3). The piece -9- is then released so that the spring -12- inserts the wedge -10- between the depression and the groove, in such a way that the wedge is locked in, thanks to the fact that its inclined plane is complementary to the inclined face -5a- of the groove -5- (figure 4).

In this position, the bar -1- is totally immobilized, with no possibility of drawing back, thus leaving the hook-up device incorporated to the body of the vehicle.

In order to detach the hook-up device, it is enough to give a sharp blow on the head -11a- of the extension -11-, so that the piece -9- withdraws compressing the spring -12- and the wedge -10- releases the shank -4-.

It is obvious that attachment and detachment of the hook-up device can be carried out rapidly and simply, without calling for the use of any tools.

In order to lock the triangular shank -4- in the complementary housing -7- the wedge device shown in the drawing or any other manually-operated can be used, for example an eccentric.

In any case, the important feature is the interlocking of the triangular shank wiyhin the housing -7-, which is also triangular, ensuring a reliable coupling which cannot come undone by the vibrations and stresses to which the hook-up device is subjected during work.

Independent of the object of the invention shall be the materials used in manufacturing of the components of the hook-up device, shapes and dimensions of same and all accessory details which might be presented, as long as they do not affect its essential nature.

## Claims

1. Hook-up device for trailers and the like, comprising a bar (1) provided at one end with an elbow (2) crowned by a ball or ball joint (3) which can be coupled to the hook-up device of the trailer, caravan or the like, said bar (1) being fitted in removable position on the body of the driving vehicle, characterized in that the end of the bar (1) opposite the elbow (2) presents a shank (4) of triangular cross section, intended to be coupled in a wedge-like manner into a housing (7) of a piece (6) forming a single unit with the body of the driving vehicle, the inner shape of which housing is also triangular and complementary to the outer shape of the shank (4) described, the housing (7) and the bar shank (4) being provided with an interlocking securing device which can easily be detached whenever wished, in order to ensure immobilization of the bar (1) once the shank (4) has been coupled into the housing (7).

2. Hook-up device as claimed in claim 1, characterized in that the securing device comprises a wedge (10) transversally slidable with respect to the position of the shank (4), which tends to remain fitted in a recess formed by complementary lowered sections (5,8) provided at the bottom of the shank housing (7) and in the shank (4) itself, the wedge (10) being provided with an extension (11) which projects from the housing (7) when it is in working position.
